# EUROPÄISCHE PATENTANMELDUNG

(11) **EP 0 948 116 A2**
(43) Veröffentlichungstag der Anmeldung: **06.10.1999**
(21) Anmeldenummer: 99890111.0
(22) Anmeldetag: 30.03.1999
(51) Int. Cl.: H02K 9/06, H02K 7/14, H02K 17/30, H02K 5/22, H02K 5/15, H02K 5/20

(54) **Elektromotor mit Luftkühlung**

(30) Priorität: 31.03.1998 AT 20698 U
(71) Anmelder: ATB Austria Antriebstechnik Aktiengesellschaft, 8724 Spielberg (Steiermark) (AT)
(72) Erfinder: Sommer, Rudolf, 8715 St. Lorenzen (AT); Sand, Hansjörg, 8724 Spielberg/Zeltweg (AT); Muhrer, Robert, 8724 Spielberg/Zeltweg (AT)
(74) Vertreter: Beer, Manfred, Dipl.-Ing.

(57) **Zusammenfassung**

Ein Elektromotor (1) ist innerhalb eines topfförmigen Gehäuses (10) angeordnet und mit diesem zu einer Einheit verbunden. Das topfförmige Gehäuse wird von den Lagerschilden (6) und (7) gebildet, die vorzugsweise identisch ausgebildet sind, und zylindermantelförmige Wandteile (81) aufweisen, die aneinander über Flansche (82) anliegen und über diese Flansche (82) miteinander zu dem topfförmigen Gehäuse verbunden sind. Über das eine Lagerschild (7) ist ein Verschaltungsteil (91) gesteckt, der einen Hilfskondensator (92) und weitere zur Antriebseinheit gehörende elektrische und elektronische Schaltungsteile und Komponenten trägt. Über den Verschaltungsteil (91) ist eine Haube (100) gesetzt, in der Lufteintrittsöffnungen (101) ausgespart sind. Das Statorpaket (2) des Elektromotors (1) ist mit einem der Lagerschilde, vorzugsweise mit dem belüftungsseitigen Lagerschild (7) fest verbunden. Das den Luftstrom durch das von den Lagerschilden (6) und (7) gebildete Gehäuse bewirkende Lüfterrad (20) ist auf der Abtriebsseite des Elektromotors (1) montiert, wo auf der Rotorwelle (5) auch ein Träger (85) für ein Messer eines Rasenmähers befestigt sein kann.

Dadurch, daß der Motor (1) und das Gehäuse (10) zu einer Einheit zusammengefaßt sind, ergeben sich auch bei Änderungen der Form und der Abmessungen der dem Motor benachbarten Teile des Elektrogerätes, beispielsweise eines Chassis eines Rasenmähers, keine Änderungen des für die Kühlluft zur Verfügung stehenden Strömungsweges. Auch braucht bei der Formgebung des topfförmigen Gehäuses (10) ausschließlich auf eine optimale Führung des Kühlluftstromes Bedacht genommen werden.

## Beschreibung

Die Erfindung betrifft einen Elektromotor mit Luftkühlung, die vorzugsweise durch ein mit der Rotorwelle des Motors verbundenes Lüfterrad und/oder ein anderes Gebläse (beispielsweise am Messer eines Rasenmähers befestigten Flügeln) erfolgt, das einen Luftstrom erzeugt, der den Elektromotor kühlt.

Da der Durchsatz an Kühlluft von den den Motor umgebenden Wänden oder Wandteilen eines Gerätes, beispielsweise eines Rasenmähers, in das der Motor eingebaut ist, ganz wesentlich mitbestimmt wird, muß die Leistung des Kühlgebläses an die Gegebenheiten (Gehäuseform) angepaßt sein. Wenn die Gehäuseform, aus welchen Gründen immer, geändert wird, muß erneut geprüft werden, ob die Kühlleistung hinreicht. Dies ist ein nicht unerheblicher Aufwand, da schrittweise Prüfläufe durchgeführt und die daraus resultierenden Anpassungen der Luftkühlung des Elektromotors ausgeführt werden müssen. Zum anderen zwingen Wirtschaftlichkeitsaspekte Produzenten und Zulieferer zur Entwicklung immer komplexer werdender Antriebseinheiten, die vor allem im Hinblick auf ein einfaches Assembling bei den Erzeugern der Endgeräte optimiert sein müssen.

Der Erfindung liegt die Aufgabe zugrunde, hier Abhilfe zu schaffen.

Erfindungsgemäß wird diese Aufgabe dadurch gelöst, daß der Motor mit einem topfförmigen Gehäuse zu einer Einheit verbunden ist.

Da gemäß der Erfindung der Elektromotor mit einem ihn umgebenden topfförmigen Gehäuse zu einer Einheit verbunden ist, hat die Form des Gerätes, in das der Elektromotor eingebaut wird, beispielsweise die Form eines Chassis und der Abdeckung eines Rasenmähers, auf die Kühlung des Elektromotors keinen Einfluß mehr, so daß ein und dieselbe Einheit aus Elektromotor und topfförmigem Gehäuse in unterschiedlich gestaltete Geräte eingebaut werden kann, ohne daß die bisher erforderlichen Prüfläufe und Anpassungen der Luftkühlung erforderlich sind.

Vorteilhafte und bevorzugte Ausgestaltungen der erfindungsgemäßen Einheit aus Elektromotor und topfförmigem Gehäuse sind Gegenstand der Unteransprüche.

Von besonderem Vorteil ist es, daß bei der Erfindung das topfförmige Gehäuse, in dem der Elektromotor aufgenommen und mit dem Elektromotor verbunden ist, bezüglich der Luftkühlung und bezüglich der Luftführung für die Kühlung des Elektromotors ohne Rücksicht auf die übrigen Erfordernisse der Konstruktion des Elektrogerätes, für dessen Antrieb der Elektromotor bestimmt ist, optimiert werden kann.

Bei einer bevorzugten Ausführungsform der Erfindung wird der Motor beispielsweise in strömungsdynamisch optimierte, topfförmige Lagerschilde, die mit an ihnen vorgesehenen, vorzugsweise mit ihnen einstückig ausgebildeten, Wandteilen das Gehäuse ("Lagerschildgehäuse") bilden, integriert, die zusätzlich besondere Vorkehrungen für die elektrische Installation für den Einbau der Einheit in ein Gerät, beispielsweise in einen Rasenmäher, bzw. die Endmontage aufweisen können.

In einer Ausführungsform strömt die Luft durch den vom Lüfterrad und/oder vom rotierenden, gegebenfalls mit Lüfterflügeln bestückten Messer eines Rasenmähers erzeugten Luftsog von oben, durch die im oberen Teil der Schutzabdeckung vorgesehenen Luftlöcher und beströmt das der besseren Wärmeabfuhr wegen vorzugsweise mit Rippen gestanzte Statorblechpakt des Motors nach dem Durchtritt durch Wandöffnungen in dem beispielsweise aus zwei identischen, topfförmigen Hälften gebildeten Lagerschildgehäuse.

In einer wertanalytisch optimierten Ausführungsform der Erfindung ist das Statorpaket nur einseitig, d. h. nur mit einer Hälfte des Lagerschildgehäuses starr verbunden (z.B. verschweißt). Diese wirtschaftlich günstige Ausführungsform hat den Vorteil, einen größeren, weniger beeinträchtigten Kühlluftstrom im Statorbereich zuzulassen. Sie ermöglicht zudem den Einbau unterschiedlicher Statorpaketlängen, wodurch besser und einfacher als bei klassischen Bauformen von Rasenmähermotoren, verschiedenen Leistungserfordernissen Rechnung getragen werden kann. Auch die Rotorwellen können bei dieser Ausführungsform wegen des durch die Länge des Lagerschildgehäuses vorgegebenen Lagerabstandes unabhängig von der jeweils vorgesehenen Motorleistung, also unabhängig von der erforderlichen Rotorlänge, immer in gleicher Länge, d.h. in größeren Stückzahlen in gleicher Ausführung gefertigt werden.

Die in der Schutzabdeckung (Haube) vorzusehenden Öffnungen können ohne weiteres z.B. bei Verwendung der Einheit in einem Rasenmäher die einschlägigen Anforderungen der IEC 60335 (elektrische Sicherheit) und IEC 60529 (IP-Schutzart) erfüllen, da die Nicht-Zugänglichkeit zu stromführenden Teilen des Motors, bzw. zu den zur Antriebseinheit gehörigen elektronischen Schaltungsteilen und Komponenten, die unter dieser Abdeckung untergebracht sind, durch entsprechende konstruktive Maßnahmen gewährleistet werden kann.

In einer Ausführungsform befinden sich unter der Abdeckung, die beispielsweise an ihrem zylinderförmigen Abschnitt mit Lufteintrittsöffnungen versehen ist, außer dem Hilfskondensator, der in einer Ausbuchtung derselben untergebracht sein kann, als Träger ein sogenannter Verschaltungsteil. Dieser Teil dient u.a. der Verschaltung der durch das (Blech-)Lagerschildgehäuse in die Schutzabdeckung ragenden Wicklungskontakte der Teilwicklungen, die in einem Kontaktgehäuse vormontiert sind. Diese zumeist als Crimp- oder Klemmverbindungen ausgeführten Federkontakte bedienen sich in einer Ausführungsform des Kontaktgehäuses, dessen aus isolierendem Material bestehender Teil auf sehr einfache Weise an montagetechnisch gut geeigneter Stelle am Statorpaket fixiert werden kann. Andere, ebenfalls zu Antriebseinheit gehörende elektronische Schaltungsteile und Komponenten können ebenfalls vorteilhaft auf dem Verschaltungsteil untergebracht werden.

Durch eine Aussparung in der Schutzabdeckung können in einer Ausführungsform elektrische Leitungen und allenfalls erforderliche Steuerleitungen ebenfalls an den Verschaltungsteil herangeführt werden.

Der in der Einbaulage (in einem Rasenmäher) am unteren Teil der Motorwelle angebrachte Lüfter kann als Axial- oder Radiallüfter ausgeführt sein, wobei durch entsprechende Auslegung der Abstände und Größe verbleibender Öffnungen sichergestellt wird, daß die einschlägigen Sicherheitsbestimmungen auch bei Wartungsarbeiten an einer integrierten Messeraufnahme eingehalten werden können.

Weitere Einzelheiten und Vorteile der Erfindung ergeben sich aus den in den Zeichnungen dargestellten Ausführungsbeispielen von Einheiten aus Elektromotor und topfförmigem Gehäuse und der nachfolgenden Beschreibung derselben. Es zeigt:
Fig. 1 teilweise geschnitten eine Einheit aus Elektromotor und Gehäuse,
Fig. 2 das topfförmige Gehäuse und das im Bereich des Bodens des-selben angeordnete Lagerschild,
Fig. 3 einen Schnitt längs der Linie A-A in Fig. 3,
Fig. 4a eine Einheit aus Elektromotor und topfförmigem Gehäuse, wobei auf das offene Ende des topfförmigen Gehäuses eine Kappe aufgesetzt ist,
Fig. 4b eine andere Stellung der Kappe bei einem Motor mit unten angeordnetem Lüfterrad (kurze Bauform),
Fig. 5 eine in einen nur schematisch dargestellten Rasenmäher eingebaute Einheit aus Elektromotor und topfförmigem Gehäuse,
Fig. 6 eine Einheit mit einem Motor mit kurzer Bauform,
Fig. 7 eine Ausführungsform, bei welcher der Kondensator innerhalb des topfförmigen Gehäuses aufgenommen ist,
Fig. 8 eine Einheit aus topfförmigem Gehäuse und einem Motor mit langer Bauform sowie Kappe am Gehäuse in einem Rasenmäher,
Fig. 9 eine abgeänderte Ausführungsform eines Gehäuses,
Fig. 10 im Schnitt eine weitere Ausführungsform,
Fig. 11 die Ausführungsform von Fig. 10 in auseinandergezogener Schrägansicht,
Fig. 12 eine Ausführungsform eines erfindungsgemäßen Motors mit eingebauter Motorbremse, die
Fig. 13 und 14 eine weitere Ausführungsform des topfförmigen Gehäuses in Axial- und Seitenansicht,
Fig. 15 eine Axialansicht auf das topfförmige Gehäuse wie in Fig. 13 mit einem eingesetzten rechteckigen Statorblech und
Fig. 16 eine Ansicht entsprechend Fig. 15 mit einem eingesetzten runden Statorblech,
Fig. 17 eine weitere Ausführungsform in Seitenansicht und
Fig. 18 die Ausführungsform von Fig. 17 in Schrägansicht.

Ein Elektromotor 1 mit einem Stator 2 mit Statorwicklungen 3, einem Rotor 4 mit Rotorwelle 5 und mit zwei Lagerschilden 6 und 7 für die Rotorlager 8 und 8' als wesentliche Bestandteile ist in einem topfförmigen Gehäuse 10, das an einem Ende einen Boden 11 aufweist und das am anderen Ende 12 offen ist, aufgenommen.

Das Gehäuse 10 kann auf beliebige Weise, beispielsweise auch über die die Lagerschilde 6 und 7 am Statorpaket 2 festlegende Motorverschraubung 9 verbunden sein. Hiezu können an der Innenseite der Wand 13 des topfförmigen Gehäuses 10 (nicht dargestellte) Befestigungslaschen od. dgl. vorgesehen, beispielsweise einstückig angeformt sein.

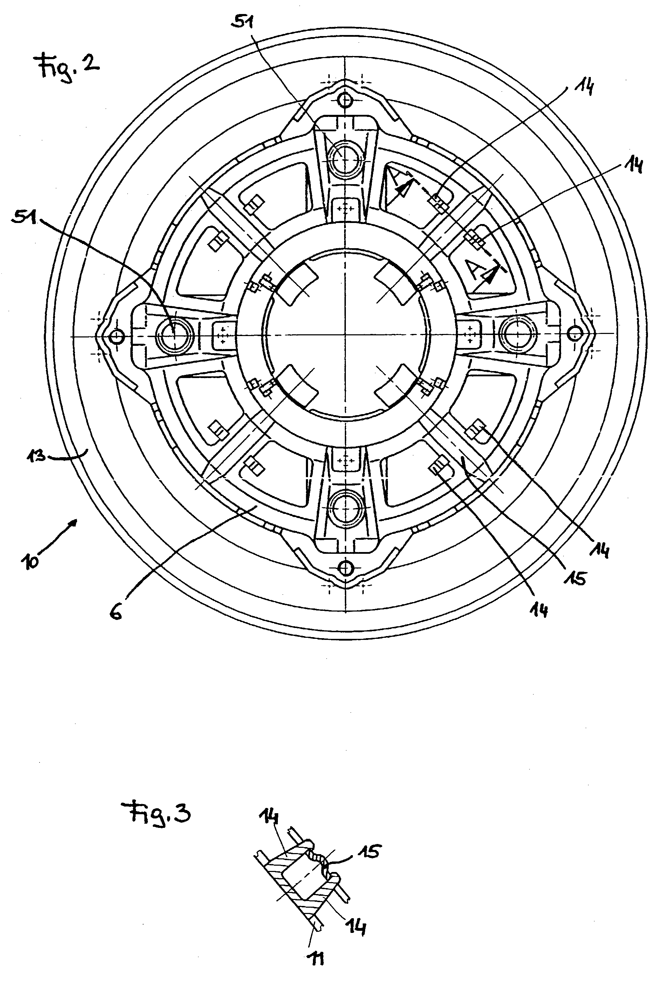

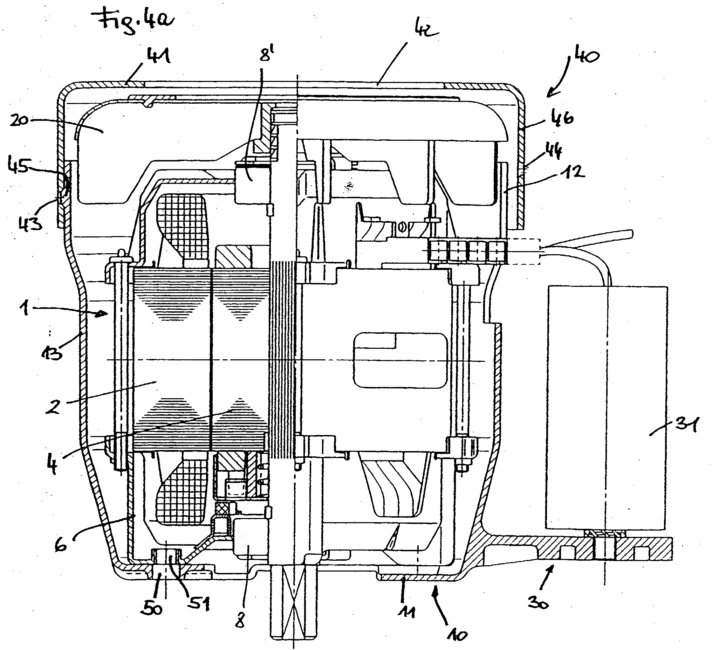

Im gezeigten Ausführungsbeispiel liegt der Motor 1 mit seinem Lagerschild 6 von innen her am Boden 11 des topfförmigen Gehäuses 10 auf. Zur Verbindung des topfförmigen Gehäuses 10 mit dem Motor 1 sind im gezeigten Ausführungsbeispiel vom Boden 11 in das Innere des topfförmigen Gehäuses 10 ragende Klauen 14 (Fig. 2) vorgesehen. Die Klauen 14 sind nach Art einer Rastverbindung über die Seitenränder von Radialstegen 15 des Lagerschildes 6 aufgeschnappt (Fig. 3). Wie aus Fig. 2 ersichtlich, sind im gezeigten Ausführungsbeispiel Radialstegen 15, vorzugsweise allen vier Radialstegen 15 des Lagerschildes 6 Paare aus jeweils zwei Klauen 14 zugeordnet, so daß eine sichere Befestigung des Gehäuses Haube 10 am Lagerschild 6 und damit am Motor 1 gewährleistet ist. So wird eine Einheit erhalten, bei der Motor 1 und Gehäuse 10 für die erforderlichen Handhabungen hinreichend fest miteinander verbunden sind.

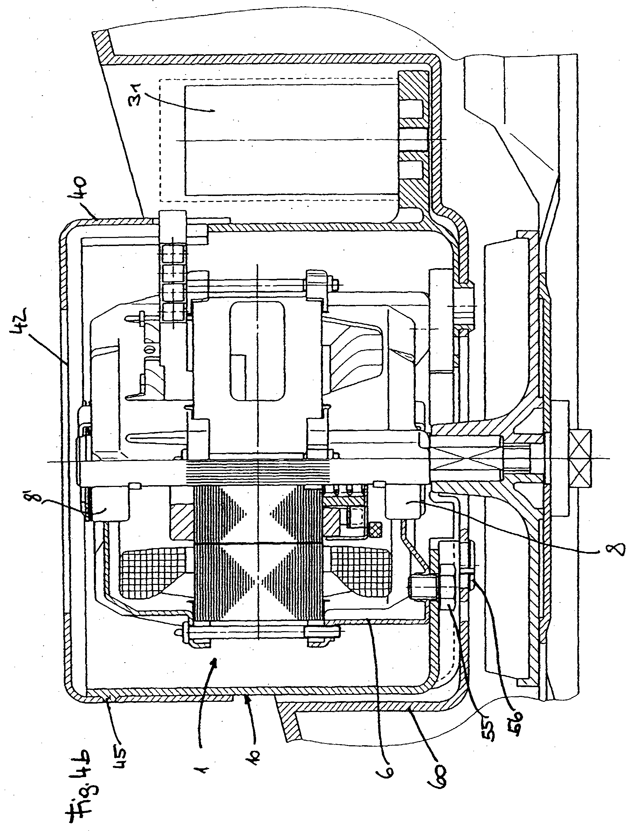

Im Bereich des offenen Endes 12 des Gehäuses 10 ist auf der Rotorwelle 5 ein Lüfterrad 20 mit mehreren Lüfterflügeln 21 befestigt. Die Lüfterflügel 21 sind nach außen durch eine ringförmige Abdeckung 22 abgedeckt. An der Abdeckung 22 ist über Rastnasen 23, die den inneren Rand der ringförmigen Abdeckung 22 umgreifen, eine Blende 24 befestigt. Die Blende 24 kann auswechselbar sein, um den Kühlluftstrom durch Ändern der Abmessungen der Blende, insbesondere der Größe der Öffnung in ihr optimieren zu können. Der vom Lüfterrad 20 - bei der in Fig. 4b gezeigten Ausführungsform eines Motors 1 mit kurzer Bauform von einem Lüfterrad, das unmittelbar über dem Messer des Rasenmähers angeordnet ist - bei Betrieb des Elektromotors 1 erzeugte Luftstrom strömt innerhalb der Wand 13 des Gehäuses 10 am Elektromotor 1 entlang, kühlt diesen und tritt durch eine Öffnung 14 im Boden 11 des Gehäuses 10 wieder aus.

Die Wand 13 des topfförmigen Gehäuses 10 kann für eine optimale Führung des vom Lüfterrad 20 erzeugten Kühlluftstromes ohne Rücksicht auf die übrige Gestaltung des Elektrogerätes, für dessen Antrieb der Elektromotor 1 bestimmt ist, ausgelegt werden.

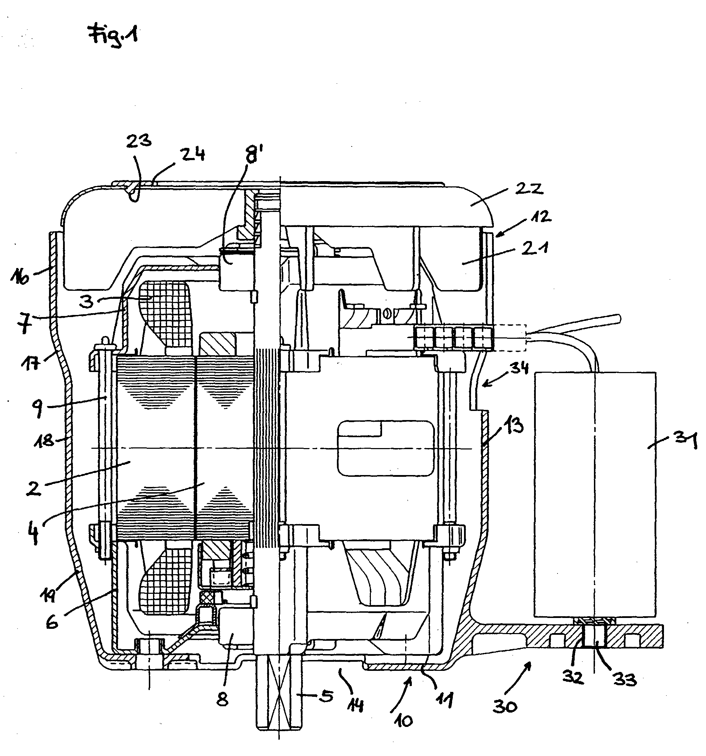

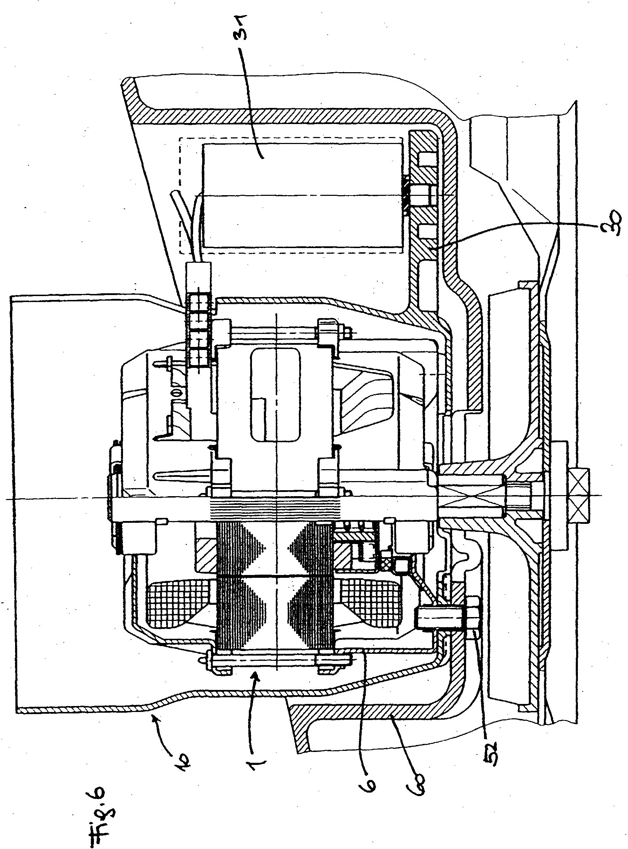

In den Ausführungsbeispielen von Fig. 1, 4a, 5 und 6 weist die Wand 13 im Bereich des dem Boden 11 gegenüberliegenden Randes 12 einen Abschnitt 16 auf, der im wesentlichen zylindermantelförmig ist. An diesen Abschnitt 16 schließt ein konischer Abschnitt 17 an, der zu einem zweiten zylindermantelförmigen Abschnitt 18 mit einem Durchmesser, der kleiner ist als jener des Abschnittes 16, führt. An den Abschnitt 18 schließt ein weiterer, konischer Abschnitt 19 an, der in den Boden 11 des topfförmigen Gehäuses 10 übergeht. Wie aus Fig. 1 ersichtlich, sind die Übergänge zwischen den Abschnitten 16, 17, 18, 19 und der Übergang zwischen dem Abschnitt 19 und dem Boden 11 gerundet ausgebildet. Wie in Fig. 4b, 7 und 8 gezeigt, kann die Wand 13 des topfförmigen Gehäuses 10 auch zylinderförmig sein.

Im Bereich des Bodens 11 ist an dem topfförmigen Gehäuse 10 außen abstehend eine Halterung 30 für einen Kondensator 31 vorgesehen. Diese Halterung 30 weist beispielsweise eine Bohrung 32 auf, in welche die Befestigungsschraube 33 des Kondensators 31 eingedreht ist.

In der Wand 13 des topfförmigen Gehäuses 10 ist eine zum freien Ende 12 hin offene Aussparung 34 vorgesehen, durch die den Elektromotor 1 speisende, elektrische Leitungen geführt sind.

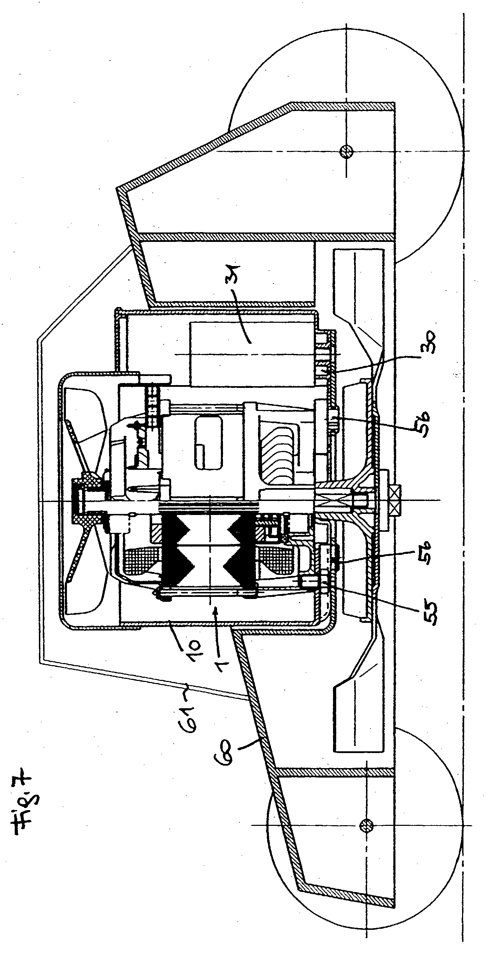

In einer abgeänderten Ausführungsform (Fig. 7) kann der Kondensator 31 auch im Inneren des topfförmigen Gehäuses 10 angeordnet sein. In diesem Fall ist die Halterung 30 für den Kondensator 31 im Inneren des Gehäuses 10 angeordnet. Das Gehäuse 10 weist im Bereich der Aufnahme für den Kondensator 31, eine Ausbuchtung auf.

Bei den in Fig. 4a und b gezeigten Ausführungsbeispielen ist über den freien Rand 12 der Wand 13 des topfförmigen Gehäuses 10 eine Kappe 40 aufgesetzt, die in ihrem Boden 41 eine Durchtrittsöffnung 42 für Luft aufweist. Um die Kappe 40 am freien Rand 12 des Gehäuses 10 so festzuhalten, damit sie sich auch bei Vibrationen nicht löst, kann diese über eine Rastverbindung mit der Wand 13 des Gehäuses 10 verbunden sein. Diese Rastverbindung ist im gezeigten Ausführungsbeispiel durch wenigstens eine über die Außenfläche der Wand 13 vorstehende Noppe 45 gebildet, die in eine Öffnung 43 in der Kappe 40, insbesondere in deren Wand 46, eingreift. Um die Kappe 40 in verschiedene Stellungen (unterschiedliche Abstände vom Boden 11 des Gehäuses 10) am topfförmigen Gehäuse 10 festlegen zu können, sind weitere Öffnungen 44 mit einem anderen Abstand vom den Boden 41 der Kappe 40 vorgesehen und/oder es sind in unterschiedlichen Abständen vom Boden 11 des topfförmigen Gehäuses 10 nach außen vorstehende Noppen 45 vorgesehen. So kann die Stellung der Kappe 40 am Gehäuse 10 der Baulänge des Motors 1 - lange Bauform Fig. 4a, kurze Bauform Fig. 4b - angepaßt werden.

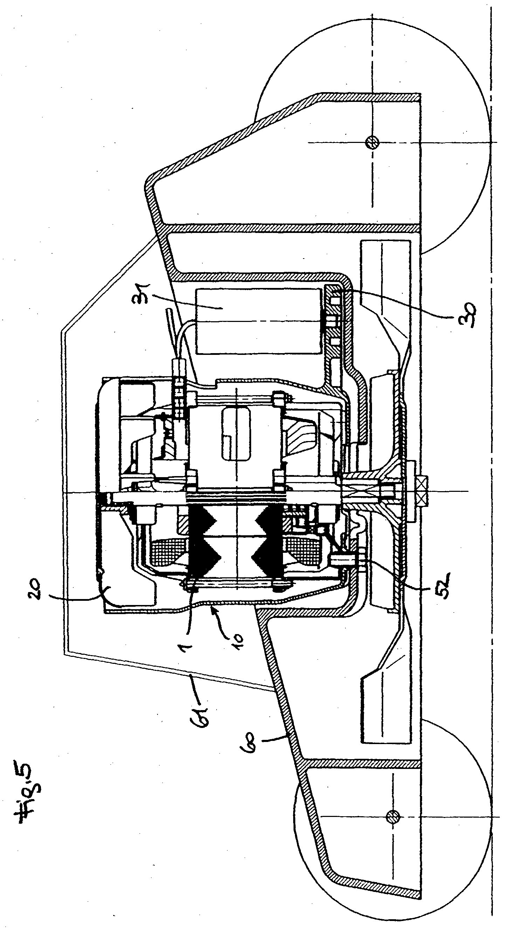

Im Boden 11 des topfförmigen Gehäuses 10 sind sowohl bei der in Fig. 1 als auch bei der in Fig. 4 gezeigten Ausführungsform Durchgangsöffnungen 50 vorgesehen, die mit Gewindebohrungen 51 im Lagerschild 6 (sh. auch Fig. 2) fluchten. So kann mit Hilfe von Verbindungsschrauben 52 die Einheit aus topfförmigem Gehäuse 10 und Elektromotor 1 in einem Elektrogerät - im in Fig. 5 gezeigten Ausführungsbeispiel in einem Rasenmäher - befestigt werden.

Es ist ersichtlich, daß die Wirksamkeit der vom Lüfterrad 20 bewirkten Luftkühlung des Elektromotors 1 (Luftdurchsatz) von der Form des topfförmigen Gehäuses 10 und nicht von der Form des Chassis 60 oder einer Abdeckung 61 des Rasenmähers abhängt. Dies zeigen die Einbaubeispiele der Fig. 5 bis 8, bei welchen Einheiten aus Motor 1 und Gehäuse 10 in Rasenmäher eingebaut sind. Es ist auch ersichtlich, daß die Verbindung Motor 1 - Gehäuse 10 z.B. durch die Rast-klauen 14 bei eingebauter Einheit Motor 1 - Gehäuse 10 nicht belastet wird, da die Montageschrauben 52 für den sicheren Halt des Gehäuses 10 sorgen. Somit kann ein und dieselbe Einheit aus Elektromotor 1 und topfförmigem Gehäuse 10 für unterschiedliche Rasenmäher oder auch dann ohne Änderungen verwendet werden, wenn die Form des Rasenmähers aus konstruktiven Gründen oder aus Gründen des Designs geändert wird.

Durch das topfförmige Gehäuse 10, das beispielsweise so wie die Kappe 40 ein Kunststoffspritzgußteil sein kann, wird auch ein Trans-portschutz für den Elektromotor und dessen Lüfterrad erreicht, der nicht nur Beschädigungen des Elektromotors, sondern auch ein Verschmutzen desselben während des Transportes, des Einbaus und des Betriebes verhindert.

Anstelle der Verbindung zwischen Gehäuse 10 und Elektromotor 1 über Klauen 14 kann, wie in den Fig. 4b, 7 und 8 gezeigt, die Einheit aus Motor 1 und Gehäuse 10 durch Verbindungsschrauben 55, die in Gewindebohrungen im Lagerschild 6 eingedreht sind, erfolgen.

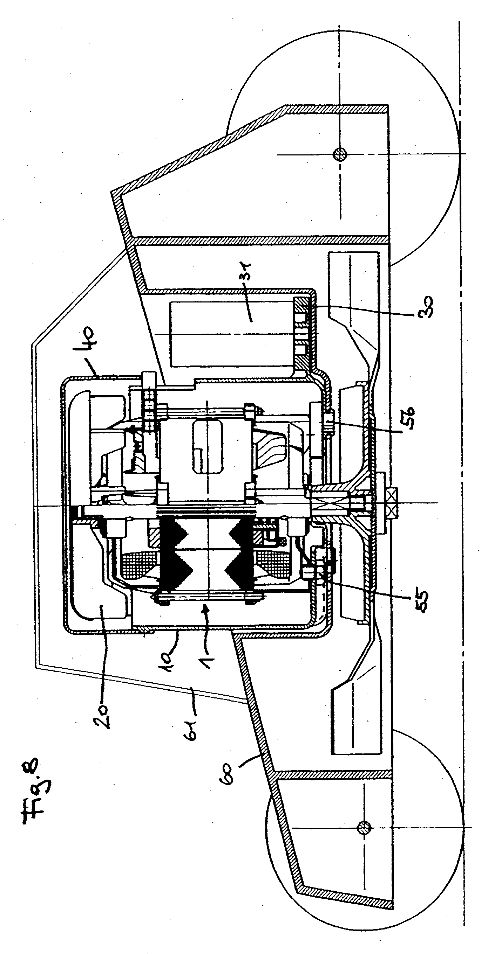

Sowohl bei Verbindung des Gehäuses 10 mit dem Elektromotor 1 über Klauen 14 als auch bei Verbindung über Schrauben 55 besteht die Möglichkeit, die Einheit aus Motor 1 und Gehäuse 10 über Rastvorsprünge 56 an dem Gerät, beispielsweise dem Chassis eines Rasenmähers, festzulegen ((Fig. 7, 8).

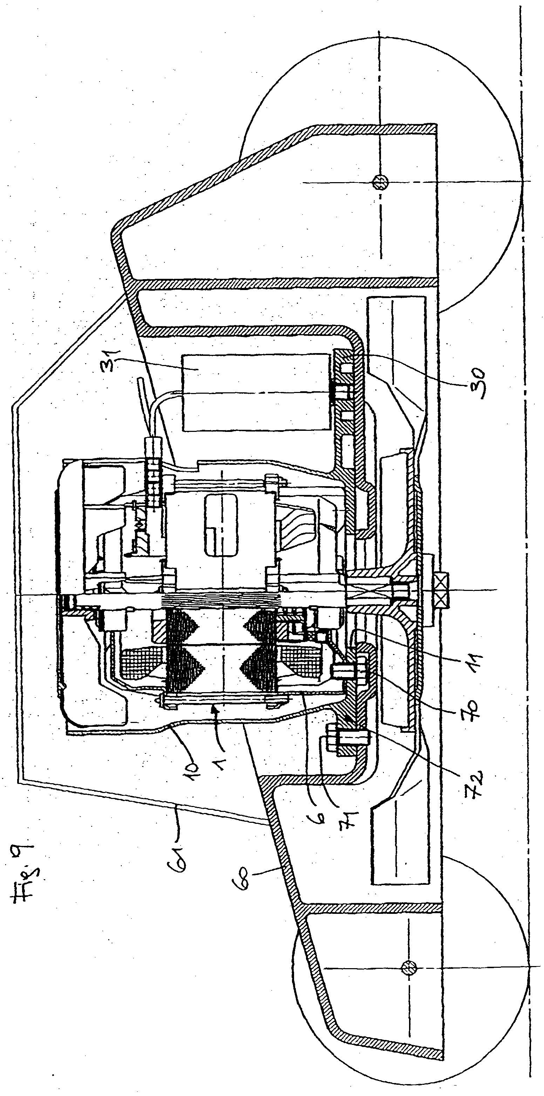

Bei der in Fig. 9 gezeigten Ausführungsform wird das topfförmige Gehäuse 10 mit dem Lagerschild 6 des Elektromotors 1 durch Schraubbolzen 70 zu einer Einheit verbunden. Die Einheit aus Elektromotor 1 und Gehäuse 10 wird über weitere Schraubbolzen 71 und Zungen 72, die vom Boden 11 des Gehäuses 10 nach außen abstehen, mit dem Chas-sis 60 des Rasenmähers verbunden.

Die Schraubbolzen 71 können auch in einem Ringflansch, der im Bereich des Bodens 11 vom Gehäuse 10 absteht, vorgesehene Löcher durchgreifen, um die Einheit aus Motor 1 und Gehäuse 10 mit dem Chassis 60 des Rasenmähers zu verbinden. Diese Art der Befestigung der Einheit aus Motor 1 und Gehäuse 10 kann auch bei einer Ausführungsform des Gehäuses 10 angewendet werden, bei der die Halterung 30 für den Kondensator 31 innerhalb des Gehäuses 10 angeordnet ist.

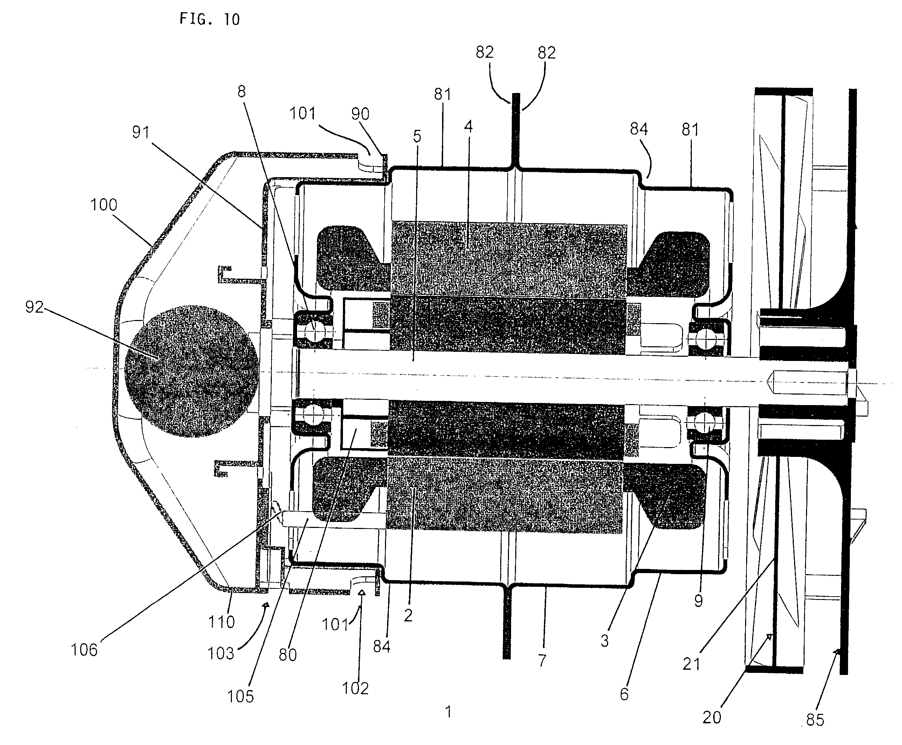

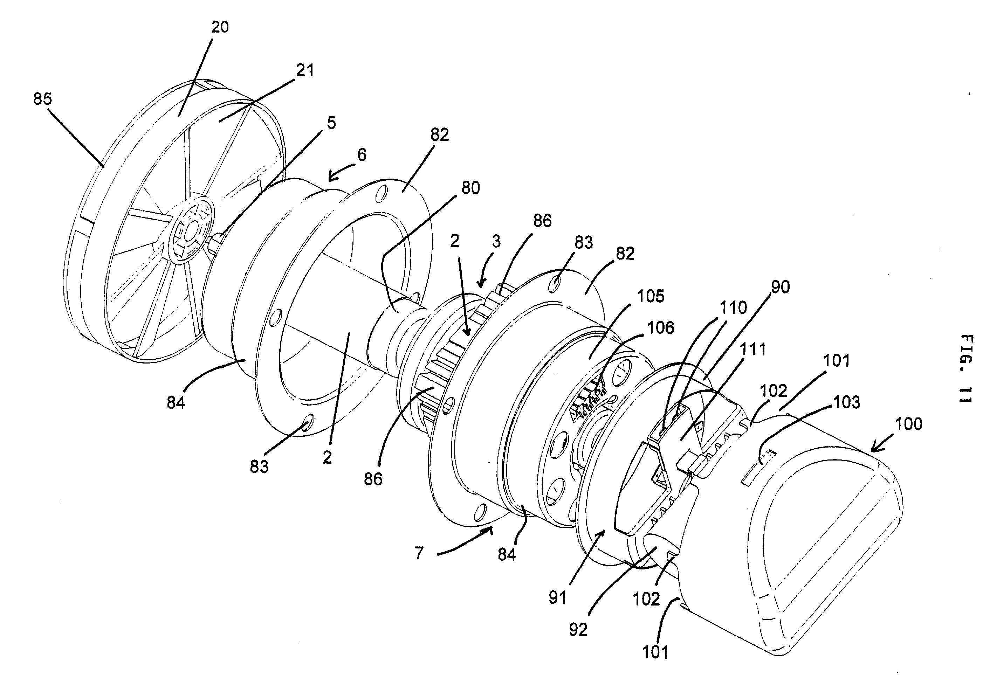

Der Elektromotor 1, der die in den Fig. 10 und 11 gezeigte Ausführungsform besitzt, weist ebenfalls einen Stator 2 mit Statorwicklung 3, sowie einen Rotor 4, der mit seiner Rotorwelle 5 in Rotor-lagern 8 und 9 gelagert ist, auf. Die Rotorlager 8 und 8' sind in entsprechende Aufnahmen in den Lagerschilden 6 und 7 gehalten. Zwischen dem Rotor 4 und dem Lagerschild 7 ist bei der in Fig. 10 und 11 gezeigten Ausführungsform eine Bremsvorrichtung 80 vorgesehen, die beispielsweise die aus der EP 136 282 A oder der EP 360 779 A bekannte Bauart besitzen kann. Die Bremsvorrichtung 80 wirkt mit der ihr benachbarten Fläche des Lagerschildes 7 zusammen und bewirkt, daß der Rotor 4 beim Abschalten des Elektromotors 1 rasch abgebremst wird.

Die Lagerschilde 6 und 7 der in den Fig. 10 und 11 gezeigten Ausführungsform eines erfindungsgemäßen Elektromotors 1 ergänzen einander zu einem topfförmigen Gehäuse ("Lagerschildgehäuse"), da sie zur Achse des Rotors 4 konzentrisch angeordnete, gestufte, zylindermantelförmige Wandteile 81 besitzen, die zusammen ein Gehäuse bilden. In der in den Fig. 10 und 11 gezeigten Ausführungsform stehen von den einander zugekehrten Enden der Wandteile 81 der Lagerschilde 6 und 7 Flansche 82 nach außen ab, über welche die Lagerschilde 6 und 7 miteinander verbunden werden können. Andere Arten der Verbindung de rWandteile 81 zu einem Gehäuse, z.B. ineinandergesteckte Enden der Wandteile, sind ebenfalls möglich. In den Flanschen 82 sind Löcher 83 für Schrauben vorgesehen. Die Lagerschilde 6 und 7 können miteinander über die Flansche 82 auch durch andere Maßnahmen, wie Kleben oder Verschweißen verbunden werden. Die Flansche 82 können auch dazu herangezogen werden, die Baueinheit aus Motor und Gehäuse, gegebenenfalls schwingungsmäßig entkoppelt, in einer Maschine, z.B. einem Rasenmäher, einem Lüfter, einem Häcksler, einem Betonmischer, einer Küchenmaschine zu montieren. Die Montage in einer Maschine kann über Schrauben oder lösbar über Riegel-, Schnapp- oder Bajonett-Verschluß-Verbindungen erfolgen. Dies bedeutet, daß der Motor leicht ausgebaut und ersetzt oder aber in eine andere Maschine eingesetzt werden kann.

Insbesondere aus der Darstellung von Fig. 10 ist ersichtlich, daß sich die Lagerschilde 6 und 7 zueinander zu einem topfförmigen Gehäuse ergänzen, das den Elektromotor 1 zur Gänze umgibt.

Die Lagerschilde 6 und 7 können identisch ausgebildet sein, was eine weitere Vereinfachung der Herstellung des Motors 1 mit seinem von den Lagerschilden 6 und 7 gebildeten Gehäuse ergibt.

Auf die Rotorwelle 5 kann (abtriebsseitig) ein Lüfterrad 20 mit Lüfterflügeln 21 und ein Träger 85 für das Messer eines Rasenmähers befestigt, z.B. aufgekeilt sein.

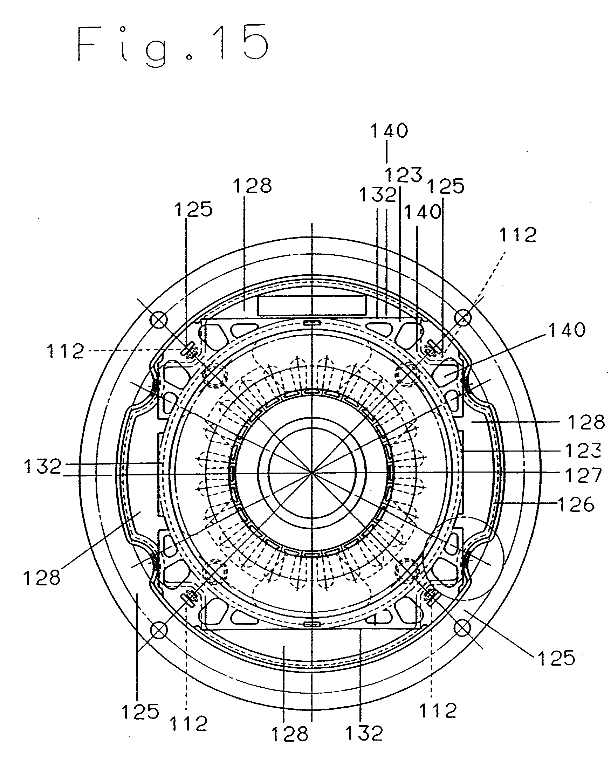

Um die Kühlwirkung des Lüfterrades 20, das Luft durch das von den Lagerschilden 6 und 7 gebildete topfförmige Gehäuse, das den Motor 1 umgibt, zu verbessern, kann die Außenseite des Statorpaketes 4 wie in Fig. 11 gezeigt, mit längslaufenden Rippen oder Nuten versehen sein, oder es sind im Statorpaket 4 Öffnungen vorgesehen (Fig. 15), durch die Kühlluft strömen kann.

Um das Statorpaket 4 in dem von den Lagerschilden 6 und 7 gebildeten topfförmigen Gehäuse festzulegen, ist das Statorpaket 4 einseitig-im gezeigten Ausführungsbeispiel - mit dem Lagerschild 7 fest verbunden, z.B. verschweißt. Dabei steht das Blechpaket des Stators 4 von innen auf einer Schulter 84 des Wandteils 81 des Lagerschildes 7 auf und liegt mit (beispielsweise vier) axialen Rippen 86 (Fig. 11) von innen an einem durchmessergrößeren Abschnitt des Wandteils 81 an. Der Stator 4 wird über die Rippen 86 und/oder die an der Schulter 84 anliegenden Stirnflächen der Rippen 86 mit dem Lagerschild 7 verbunden. Dies bedeutet, daß die axiale Länge des Stators 4 - bei gleichbleibender Länge der Rotorwelle 5 - bis zu einer maximalen Länge (Abstand der Schultern 84 der Wandteile 81 voneinander) - frei gewählt werden kann.

Über das Lagerschild 7 ist bis zu seiner Stufe 84 reichend und auf dieser Stufe 84 dort mit einem Ringflansch 90 aufliegend ein Trägerteil 91 ("Verschaltungsteil") für einen Kondensator 92 aufgeschoben. Über den Trägerteil 91 ist eine Abdeckhaube 100 geschoben, die mit ihrem freiem, Lufteintrittsöffnungen 101 aufweisenden Rand 102 auf dem Flansch 90 des Trägerteils 91 aufsitzt. Die Abdeckhaube 100 kann am Trägerteil 91 durch Aufrasten, Schrauben, Kleben usw. befestigt werden. In der beispielsweise zylindermantelförmigen Wand der Abdeckhaube 100 ist eine Durchgangsöffnung 103 für zum Elektromotor 1 führende Leitungen (Stromversorgung und Steuerung) vorgesehen.

Die Abdeckhaube 100 deckt die stromführenden Teile des Motors 1 und die zur Antriebseinheit gehörenden, elektronischen Schaltungsteile und Komponenten ab, so daß diese ohne daß die Abdeckhaube 100 abgenommen wird, nicht berührt werden können. Die Abdeckhaube 100 kann auch erst vom Kunden, der den Motor in ein Gerät einbaut, aufgesetzt werden.

Der unterhalb der Abdeckhaube 100 befindliche Trägerteil 91 dient der Verschaltung der durch das Lagerschildgehäuse 7 in die Schutzabdeckung ragenden Wicklungskontakte der Teilwicklungen 3 des Stators 2, die in einem Kontaktgehäuse 105 vormontiert sind, und über beispielsweise als Crimp- oder Klemmverbindungen ausgeführte Verbin-dungen zu Federkontakten 106 führen. Das Kontaktgehäuse 105, dessen aus isolierendem Werkstoff bestehender Teil an einer montagetechnisch günstigen Stelle am Stator 2 befestigt sein kann, führt die Adern geschützt zum Trägerteil 91 und den dort angeordneten Komponenten. Weitere ebenfalls zur Antriebseinheit gehörende, elektro-nische Schaltungsteile und Komponenten sind bei dieser Ausführungsform ebenfalls auf dem Schaltungsteil 91 untergebracht. Die federnden Kontakte 106 des Kontaktgehäuses 105 liegen an Leiterbahnen 110 an, die vorzugsweise zu einem Steckergehäuse 111 im Bereich der Öffnung 103 in der Abdeckhaube 100 führen.

Insbesondere mit der in den Fig. 10 und 11 gezeigten und anhand dieser Figuren beschriebenen Ausführungsform des erfindungsgemäßen Motors kann dieser als Einheit ausgebildet sein und als solche (vormontierte) Einheit einfach in eine Maschine, beispielsweise in einen Rasenmäher eingebaut werden. Besonders vorteilhaft ist bei der Verwendung des erfindungsgemäßen Motors in seiner in den Fig. 10 und 11 gezeigten Ausführungsform, daß der Elektromotor von einer Seite her in das Chassis eines Rasenmähers eingeführt und montiert wwerden kann und daß ohne Umdrehen des Chassis der Messerbalken von derselben Seite her montiert werden kann.

Durch die spezielle Ausbildung des Gehäuses, insbesondere des von den beiden Lagerschilden gebildeten Gehäuses kann die Kühlung des Elektromotors durch einen Luftstrom optimiert werden. Dadurch läßt sich ein besserer Wirkungsgrad erzielen und bei geringerem Materialeinsatz und gleicher Leistung ein kostenoptimierter Motor zur Verfügung stellen.

Die Möglichkeit, den erfindungsgemäßen Elektromotor als Einheit auszuführen, ergibt weniger Einzelteile, so daß einfacher zu dispo-nieren ist.

Von Vorteil ist, daß durch entsprechende Wahl der axialen Länge des Stators bei unveränderter Länge nicht nur der Rotorwelle sondern auch der Außenabmessungen des Motors, Motoren mit unterschiedlicher Leistung zur Verfügung gestellt werden können. Dadurch ergibt sich eine vorteilhafte Verringerung der Teile und die Möglichkeit eines einheitlichen Designs.

Da bei dem erfindungsgemäßen Motor in einer Ausführungsform Litzen und Steckverbinderanschlüsse, die fehler- und verschleißanfällig sind, entfallen (die elektrischen Anschlüsse sind auf dem Trägerteil vormontiert), ist der erfindungsgemäße Motor weniger anfällig auf Produktionsfehler und Verschleiß.

Da der erfindungsgemäße Motor, insbesondere wenn sein Gehäuse aus den in den Fig. 10 und 11 gezeigten Lagerschilden 6 und 7 gebildet ist, über den nach außen abstehenden Flansch in einer Maschine, z.B. dem Chassis eines Rasenmähers montiert werden kann, ist eine leicht lösbare Verbindung zwischen dem Motor als Antriebseinheit und dem Chassis des Rasenmähers möglich. Dies erlaubt es, den Motor für Wartungs- und Austauscharbeiten auszubauen, und eröffnet die Möglichkeit, ein- und denselben Motor für unterschiedliche Maschinen oder Geräte zu verwenden.

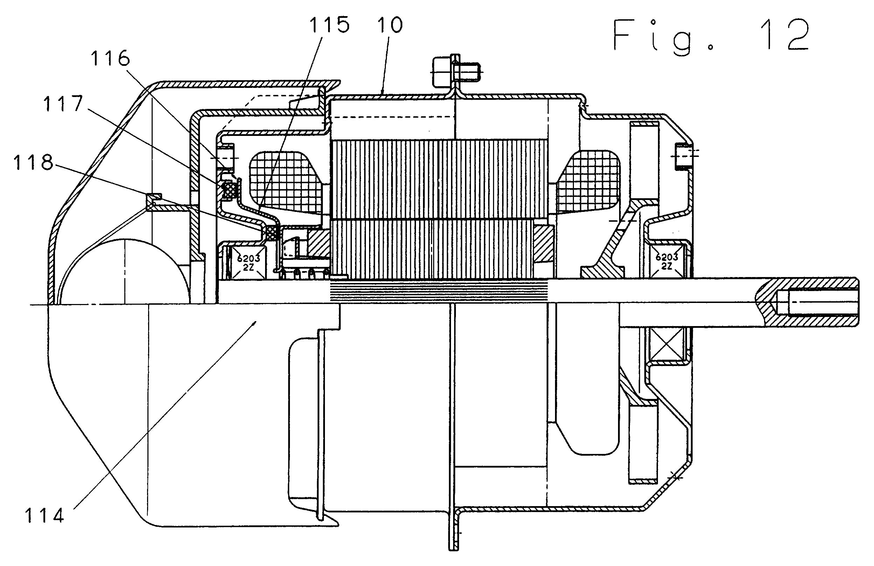

In Fig. 12 ist eine Ausführungsform eines Motors dargestellt, bei dem im topfförmigen Gehäuse 10 eine Motorbremse 114 eingebaut ist, die ebenfalls die beispielsweise aus der EP 136 282 A oder der EP 360 779 A bekannte Bauart besitzen kann. Abweichend von den bekannten Bauarten der Motorbremse weist die mit dem Rotor mitdrehende Bremsscheibe 115 eine topfförmige Grundform mit einer ringscheibenförmigen, radial nach außen verlaufenden Verbreiterung 116 auf. Je nach Bauart bzw. erforderlicher Bremsleistung der Motorbremse kann nur der äußere Bremsbelag 117 oder auch zusätzlich ein radial weiter innen liegender Bremsbelag 118 vorgesehen sein, wobei es sich versteht, daß in der Ausführungsform, bei der auch ein zweiter, radial weiter innen liegender Bremsbelag 118 vorgesehen ist, eine höhere Bremsleistung der Motorbremse 114 gegeben ist.

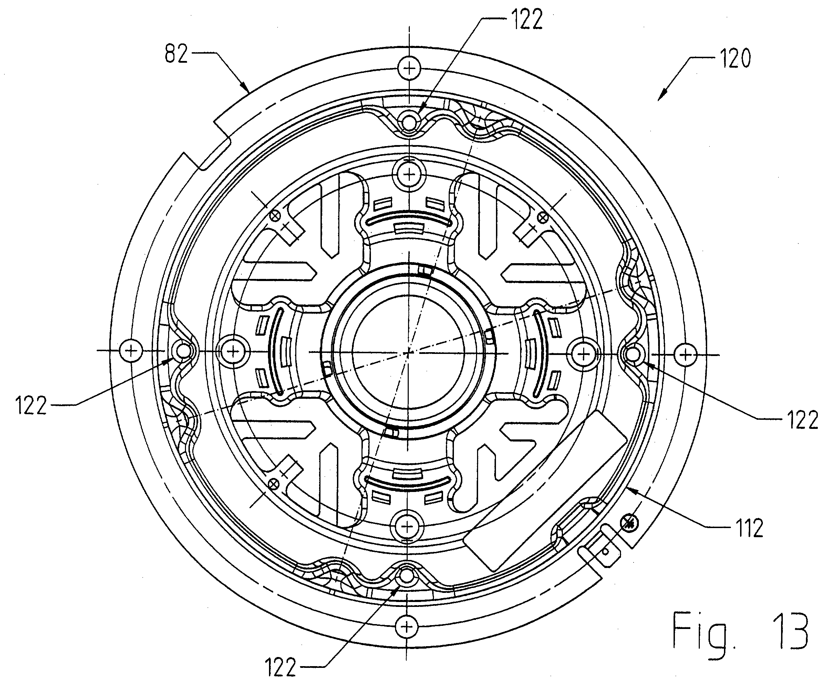

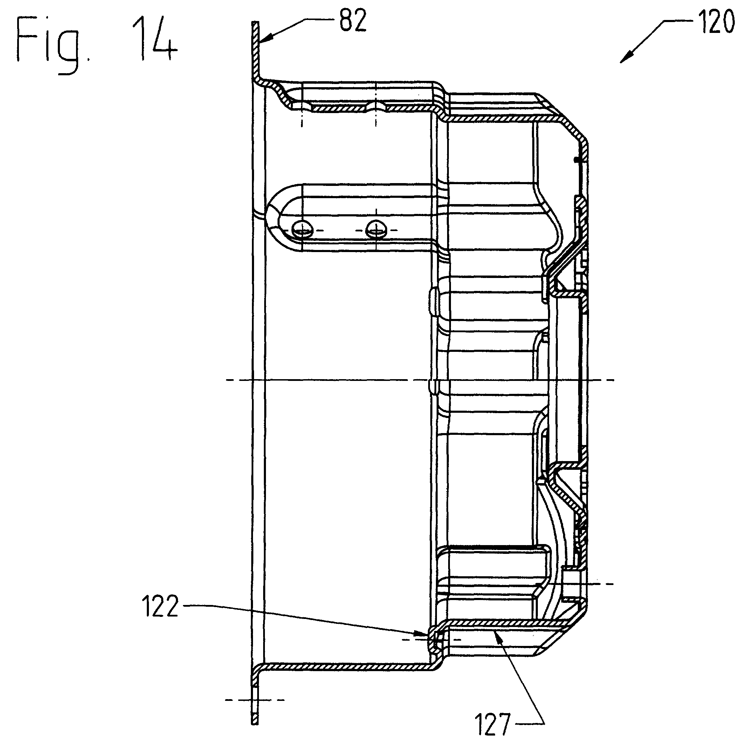

In den Fig. 13 und 14 ist ein Lagerschild 120 dargestellt, das im großen und ganzen den Lagerschilden 6, 7 von Fig. 10 und 11 entspricht. Das Lagerschild 120 weist allerdings eine Wand 127 mit im wesentlichen konstantem Durchmesser auf. Um das Statorpaket 4 in axialer Richtung festzulegen, weist die Wand 127 vier symmetrisch am Umfang verteilte, nach innen vorspringende, sickenförmig nach innen geprägte Anschläge 112 auf, welche in einer Radialebene liegende Anschlagflächen 122 aufweisen, an welchen das jeweils äußerste Statorblech anliegt.

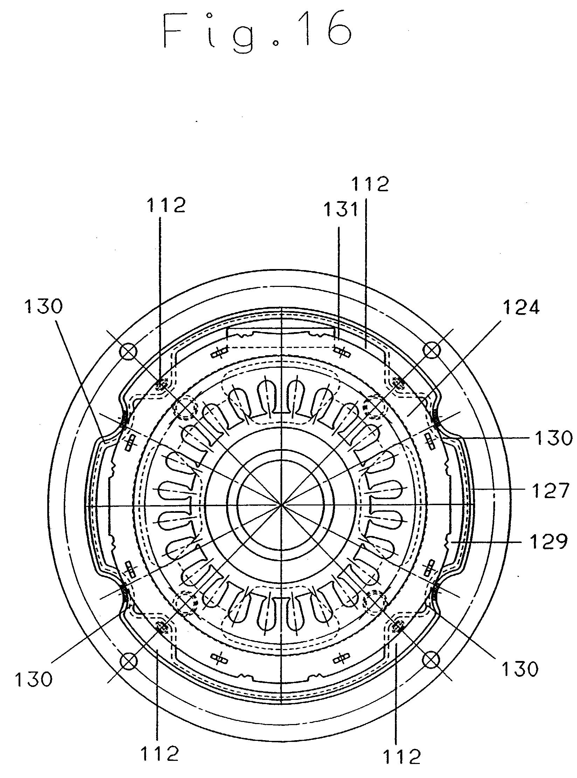

In den Fig. 15 und 16 ist in einer Axialansicht dargestellt, wie ein im Querschnitt quadratisches (Fig. 15) und ein rundes (Fig. 16) Statorblechpaket 123 bzw. 124 in einem Lagerschild 120 aufgenommen ist, das einen Teil des topfförmigen Gehäuses 10 bildet.

Bei der in Fig. 15 dargestellten Ausführungsform eines rechteckigen Statorblechpaketes 123 liegt dieses im Bereich der abgerundeten Ecken 125 an den Anschlägen 112 an. Durch die quadratische Form des Statorblechpaketes 123 entstehen zwischen den Außenkanten 132 des Statorblechpaketes 123 und der Innenfläche 126 der Wand 127 Freiräume 128, die als Lüftungskanäle innerhalb des topfförmigen Gehäuses 10 dienen, und die durch die Anschläge 112 nicht verengt werden. Zusätzlich sind im Statorblechpaket 123 achsparallele Durchgangsöffnungen 140 zur Verbesserung der Kühlung des Motors vorgesehen.

Um auch bei runden Statorblechpaketen 124, wie in Fig. 16 dargestellt ist, einen ringförmigen Belüftungskanal 129 zu erhalten, sind in der Wand 127 des Lagerschildes 120 zusätzlich radial nach innen ragende Vorsprünge 130 vorgesehen, die bevorzugt ebenfalls vierfach symmetrisch angeordnet sind. Die Vorsprünge 130 liegen von außen radial am im wesentlichen kreisrunden Außenumfang 131 des runden Statorbleches 124 an und zentrieren dieses in der Mitte, wobei die Anschläge 112 auch in dieser Ausführungsform das axiale Verschieben des Statorpaketes verhindern.

Bevorzugt ist auch bei der in den Fig. 13 bis 16 dargestellten Ausführungsform des Lagerschildes 120, daß, wie in Fig. 11 dargestellt, zwei gleich ausgebildete Lagerschilde zu einem topfförmigen Gehäuse 10 zusammengefügt werden.

Wie in Fig. 15 zu sehen ist, stören die Vorsprünge 130, die zum Zentrieren eines runden Statorpaketes 124 dienen, auch bei rechteckigen Statorpaketen nicht, so daß ein einheitliches Lagerschildgehäuse 120 sowohl für runde als auch rechteckige Statorpakete verwendet werden kann.

Um die äußeren Abmaße bzw. die Dimensionierung weiter zu verein-heitlichen, kann das Lüfterrad auch innerhalb des topfförmigen Gehäuses angeordnet sein, wobei der Motor je nach Anforderung mit oder ohne Lüfterrad (z.B. für Rasenmäher) zusammengebaut werden kann.

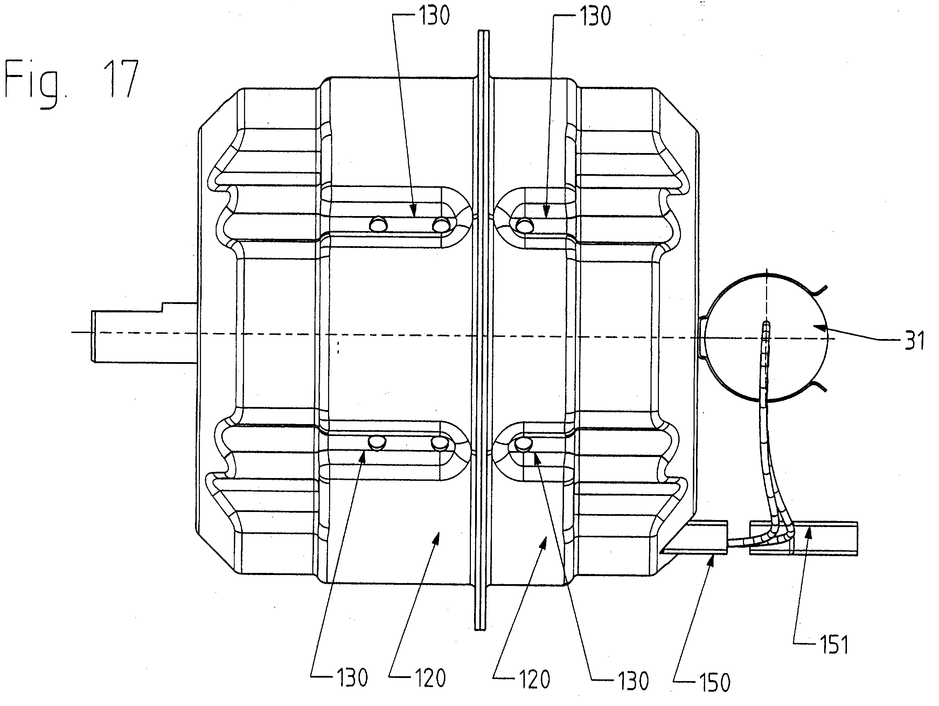

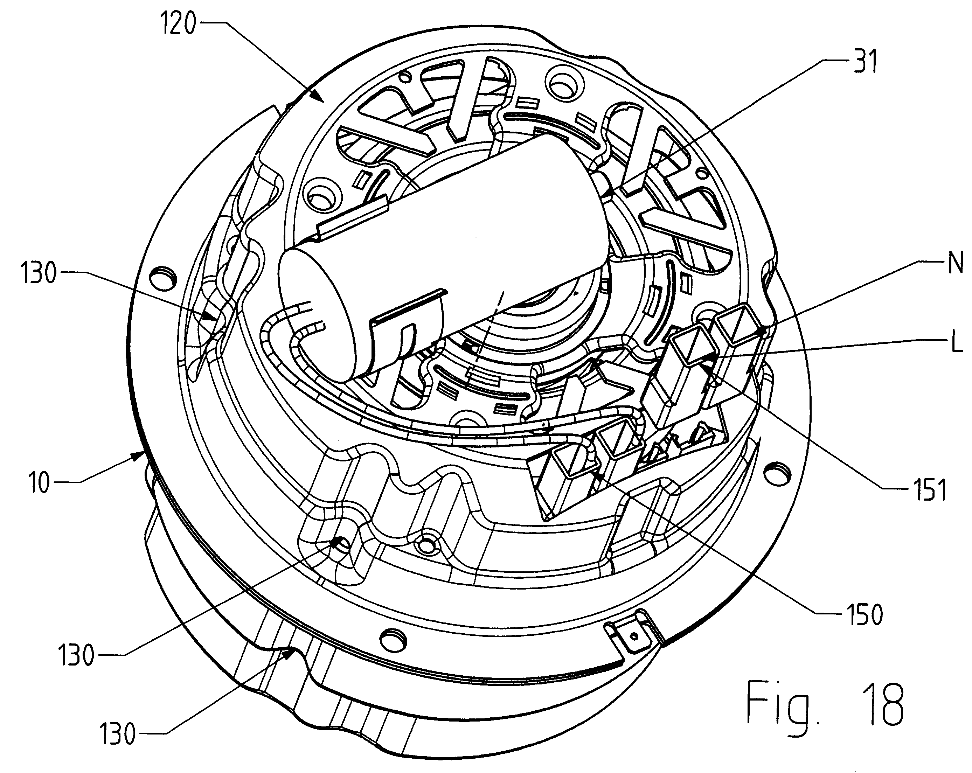

Fig. 17 und 18 zeigen in Seitenansicht bzw. in Schrägansicht den Motor mit dem von Lagerschilden 120 gemeinsam gebildeten Gehäuse 10. An dem in Fig. 17 rechts angeordneten Lagerschild 120 ist ein Flach-steckergehäuse 150 angeordnet, in das ein Stecker 151 eingesteckt werden kann. Diese Ausführungsform kann an Stelle der in Fig. 10 und 11 gezeigten Kontaktierung vorgesehen sein.

Zusammenfassend kann ein Ausführungsbeispiel der Erfindung beispielsweise wie folgt dargstellt werden:

Ein Elektromotor 1 ist innerhalb eines topfförmigen Gehäuses 10 angeordnet und mit diesem zu einer Einheit verbunden. Das topfförmi-ge Gehäuse wird von den Lagerschilden 6 und 7 gebildet, die vorzugsweise identisch ausgebildet sind, und zylindermantelförmige Wandteile 81 aufweisen, die aneinander über Flansche 82 anliegen und über diese Flansche 82 miteinander zu dem topfförmigen Gehäuse verbunden sind. Über das eine Lagerschild 7 ist ein Verschaltungs-teil 91 gesteckt, der einen Hilfskondensator 92 und weitere zur Antriebseinheit gehörende elektrische und elektronische Schaltungsteile und Komponenten trägt. Über den Verschaltungsteil 91 ist eine Haube 100 gesetzt, in der Lufteintrittsöffnungen 101 ausgespart sind. Das Statorpaket 2 des Elektromotors 1 ist mit einem der Lagerschilde, vorzugsweise mit dem belüftungsseitigen Lagerschild 7 fest verbunden. Das den Luftstrom durch das von den Lagerschilden 6 und 7 gebildete Gehäuse bewirkende Lüfterrad 20 ist auf der Abtriebs-seite des Elektromotors 1 montiert, wo auf der Rotorwelle 5 auch ein Träger 85 für ein Messer eines Rasenmähers befestigt sein kann.

Dadurch, daß der Motor 1 und das Gehäuse 10 zu einer Einheit zu-sammengefaßt sind, ergeben sich auch bei Änderungen der Form und der Abmessungen der dem Motor benachbarten Teile des Elektrogerätes, beispielsweise eines Chassis eines Rasenmähers, keine Änderungen des für die Kühlluft zur Verfügung stehenden Strömungsweges. Auch braucht bei der Formgebung des topfförmigen Gehäuses 10 ausschließ-lich auf eine optimale Führung des Kühlluftstromes Bedacht genommen werden.

## Patentansprüche

1. Elektromotor mit Luftkühlung, insbesondere Gebläsekühlung, dadurch gekennzeichnet, daß der Motor (1) mit einem topfförmigen Gehäuse (10) zu einer Einheit verbunden ist.

2. Motor nach Anspruch 1, dadurch gekennzeichnet, daß der Motor (1) mit seinen dem Lüfterrad (20) gegenüberliegenden Lagerschild (6) auf der Innenseite des Bodens (11) des topfförmigen Gehäuses (10) anliegt.

3. Motor nach Anspruch 1 oder 2, dadurch gekennzeichnet, daß das topfförmige Gehäuse (10) über die die Lagerschilde (6, 7) am Statorpaket festlegende Motorverschraubung mit dem Motor (1) verbunden ist.

4. Motor nach Anspruch 1 oder 2, dadurch gekennzeichnet, daß das topfförmige Gehäuse (10) an einem der Lagerschilde (6) des Motors (1) befestigt ist.

5. Motor nach Anspruch 4, dadurch gekennzeichnet, daß das topfförmige Gehäuse (10) über seinen Boden (11) an dem dem Lüfterrad (20) gegenüberliegenden Lagerschild (6) befestigt ist.

6. Motor nach Anspruch 4 oder 5, dadurch gekennzeichnet, daß das topfförmige Gehäuse (10) am Lagerschild (6) durch Schrauben, Nieten od. dgl. befestigt ist.

7. Motor nach Anspruch 4 oder 5, dadurch gekennzeichnet, daß das topfförmige Gehäuse (10) am Lagerschild (6) durch am Lagerschild (6) aufrastbare Verbindungsmittel (14) befestigt ist.

8. Motor nach Anspruch 7, dadurch gekennzeichnet, daß die Verbindungsmittel federnde Klauen (14) sind.

9. Motor nach Anspruch 7 oder 8, dadurch gekennzeichnet, daß die Verbindungsmittel, insbesondere die federnden Klauen (14), an radialen Stegen (15) des Lagerschildes (6) angreifen.

10. Motor nach einem der Ansprüche 1 bis 9, dadurch gekennzeichnet, daß im Boden (11) des topfförmigen Gehäuses (10) Durchtrittsöffnungen (50) für in Gewindebohrungen (51) im Lagerschild (6) eingreifende Schrauben (52) zum Befestigen der Einheit aus Motor (1) und topfförmigem Gehäuse (10) an einem mit dem Motor (1) anzutreibenden Gerät vorgesehen sind.

11. Motor nach einem der Ansprüche 1 bis 10, dadurch gekennzeichnet, daß in der Wand (13) des topfförmigen Gehäuses (10) wenigstens eine Öffnung (34) für den Durchtritt von elektrischen Leitungen vorgesehen ist.

12. Motor nach Anspruch 11, dadurch gekennzeichnet, daß die Öffnung (34) zu dem dem Boden gegenüberliegenden Rand (12) der Wand (13) des topfförmigen Gehäuses (10) hin offen ist.

13. Motor nach einem der Ansprüche 1 bis 12, dadurch gekennzeichnet, daß an das topfförmige Gehäuse (10) außen ein Träger (30) für einen Kondensator (31) angeformt ist.

14. Motor nach einem der Ansprüche 1 bis 12, dadurch gekennzeichnet, daß ein Träger (30) für einen Kondensator (31) im Inneren des topfförmigene Gehäuses (10) vorgesehen ist.

15. Motor nach Anspruch 14, dadurch gekennzeichnet, daß das topfförmige Gehäuse (10) im Bereich des Trägers (30) für den Kondensator (31) eine Ausbuchtung aufweist.

16. Motor nach einem der Ansprüche 1 bis 15, dadurch gekennzeichnet, daß das dem Boden gegenüberliegende offene Ende (12) des topfförmigen Gehäuses (10) durch eine mit einer Durchtrittsöffnung (42) für Luft versehene Kappe (40) abgeschlossen ist.

17. Motor nach Anspruch 16, dadurch gekennzeichnet, daß die Kappe (40) mit der Wand (13) des topfförmigen Gehäuses (10) verrastet ist.

18. Motor nach Anspruch 16 oder 17, dadurch gekennzeichnet, daß an der Wand (13) des Gehäuses (10) wenigstens ein Rastvorsprung (45) und in der Wand (46) der Kappe (40) wenigstens eine Rastausnehmung (43, 44) vorgesehen ist.

19. Motor nach Anspruch 18, dadurch gekennzeichnet, daß mehrere Rastvorsprünge (45) und/oder mehrere Rastausnehmungen (43, 44) zum Festlegen der Kappe (40) mit unterschiedlichem Abstand vom Boden (11) des topfförmigen Gehäuses (10) vorgesehen sind.

20. Motor nach einem der Ansprüche 1 bis 19, dadurch gekennzeichnet, daß die Wand des topfförmigen Gehäuses (10) sich zum Boden (11) des Gehäuses (10) hin verjüngt.

21. Motor nach einem der Ansprüche 1 bis 20, dadurch gekennzeichnet, daß die Wand (13) des topfförmigen Gehäuses (10) im Bereich des freien Randes (12) einen zylinderförmigen Abschnitt (16), im Anschluß daran einen sich konisch verjüngenden Abschnitt (17), im Anschluß daran einen zweiten zylinderförmigen Abschnitt (18) und im Anschluß daran einen zweiten konischen Abschnitt (19) aufweist.

22. Motor nach Anspruch 21, dadurch gekennzeichnet, daß die Übergänge zwischen den zylindermantelförmigen (16, 18) und den konischen Abschnitten (17, 19) und der Übergang zwischen dem zweiten konischen Abschnitt (19) und dem Boden (11) gerundet ausgebildet sind.

23. Motor nach einem der Ansprüche 1 bis 22, dadurch gekennzeichnet, daß im Boden (11) des topfförmigen Gehäuses (10) wenigstens eine Öffnung (14) für den Durchtritt von Kühlluft vorgesehen ist.

24. Motor nach einem der Ansprüche 1 bis 23, dadurch gekennzeichnet, daß auf dem Lüfterrad (20) auswechselbar eine Blende (24) befestigt ist.

25. Motor nach einem der Ansprüche 1 bis 24, dadurch gekennzeichnet, daß vom Gehäuse (10) im Bereich seines Bodens (11) Flansche oder Zungen (72) nach außen abstehen, in welchen Öffnungen für Schraubbolzen (71), vorgesehen sind, mittels welcher die Einheit aus Motor (1) und Gehäuse (10) mit einem mit dem Motor (1) anzutreibenden Gerät, insbesondere einem Rasenmäher, verbunden ist.

26. Motor nach Anspruch 1, dadurch gekennzeichnet, daß das Gehäuse (10) durch zylindermantelförmige, zur Achse des Rotors (4) konzentrische Wandteile (81) der Lagerschilde (6, 7) gebildet ist.

27. Motor nach Anspruch 26, dadurch gekennzeichnet, daß die Lagerschilde (6, 7) an den einander zugekehrten Enden ihrer Wandteile (81) Ringflansche (82) tragen, über die sie aneinander anliegen und über die sie miteinander verbunden sind.

28. Motor nach Anspruch 26 oder 27, dadurch gekennzeichnet, daß das Statorpaket (2) mit einem der Lagerschilde (7) verbunden, insbesondere verschweißt ist.

29. Motor nach einem der Ansprüche 26 bis 28, dadurch gekennzeichnet, daß die Wandteile (81) der Lagerschilde (6 und 7) gestuft ausgebildet und einen Abschnitt mit kleinerem Durchmesser und einen Abschnitt mit größerem Durchmesser und zwischen diesen Abschnitten eine Stufe (84) aufweisen.

30. Motor nach Anspruch 29, dadurch gekennzeichnet, daß über den Abschnitt des Wandteils (81) des Lagerschildes (7) mit kleinerem Durchmesser ein Trägerteil (91) für einen Hilfskondensator (92) und allenfalls vorgesehene, weitere elektrische oder elektronische Schaltungsteile und Komponenten gesteckt ist.

31. Motor nach Anspruch 30, dadurch gekennzeichnet, daß über den Trägerteil (91) eine Abdeckhaube (100) geschoben ist.

32. Motor nach Anspruch 30 oder 31, dadurch gekennzeichnet, daß der Trägerteil (91) mit einem endseitigen Ringflansch (90) an der Stufe (84) des Lagerschildes (7) aufsteht.

33. Motor nach Anspruch 32, dadurch gekennzeichnet, daß der freie Rand (102) der Haube (100) auf dem nach außen weisenden Ringflansch des Trägerteils (91) aufsitzt.

34. Motor nach einem der Ansprüche 31 bis 33, dadurch gekennzeichnet, daß im Bereich des freien Randes der Haube (100) Aus-sparungen (101) als Luftzutrittsöffnungen vorgesehen sind.

35. Motor nach einem der Ansprüche 1 bis 34, dadurch gekennzeichnet, daß das Statorpaket (2) an seiner Umfangsfläche mit Rippen (86) und/oder Nuten versehen ist, die in Richtung der Achse des Rotors (4) verlaufen.

36. Motor nach einem der Ansprüche 1 bis 35, dadurch gekennzeichnet, daß am Statorpaket (2) ein Kontaktgehäuse (105) befestigt ist, an dem die Wicklungskontakte der Teilwicklungen der Statorwicklung (3) montiert sind.

37. Motor nach Anspruch 36, dadurch gekennzeichnet, daß das Kontaktgehäuse (105) über federnde Kontakte (106) an wenigstens einer Leiterbahn (110) am Trägerteil (91) anliegt.

38. Motor nach einem der Ansprüche 30 bis 37, dadurch gekennzeichnet, daß in der Haube (100) eine Öffnung (103) für den Durchgang von elektrischen Leitungen und/oder Steuerleitungen, die zu den auf dem Trägerteil (91) montierten Komponenten führen.

39. Motor nach Anspruch 38, dadurch gekennzeichnet, daß die wenigstens eine Leiterbahn (110) bis in die Öffnung (103) geführt ist.

40. Motor nach einem der Ansprüche 26 bis 39, dadurch gekennzeichnet, daß das Statorpaket (4) über axiale Rippen (86) von innen an den Wandteilen (81) der Lagerschilde (6, 7) anliegt.

41. Motor nach Anspruch 40, dadurch gekennzeichnet, daß das Statorpaket (4) mit Endflächen seiner Rippen (86) von innen an der Schulter (84) des einen Lagerschildes (7) anliegt.

42. Motor nach Anspruch 39, dadurch gekennzeichnet, daß die im Bereich der Öffnung (103) liegenden Enden der Leiterbahnen (110) in einem Steckergehäuse (111) angeordnet sind.

43. Rasenmäher, dadurch gekennzeichnet, daß er eine Einheit aus Elektromotor (1) und topfförmigem Gehäuse (10) nach einem der Ansprüche 1 bis 42 als Antriebsmotor enthält.

44. Motor nach einem der Ansprüche 1 bis 43, dadurch gekennzeichnet, daß an der Wand (121) des topfförmigen Gehäuses (10) vorzugsweise vier nach innen vorspringende Anschläge (112) vorgesehen sind, an welchen sich das Statorpaket (4) axial abstützt.

45. Motor nach Anspruch 44, dadurch gekennzeichnet, daß bei einem zweiteiligen, topfförmigen Gehäuse (10) an beiden Teilen Anschläge (112) vorgesehen sind.

46. Motor nach Anspruch 44 oder 45, dadurch gekennzeichnet, daß an der Wand (121) des topfförmigen Gehäuses (10) vier nach innen ragende Vorsprünge (130) vorgesehen sind, welche am Statorpaket (4) radial von außen anliegen.

47. Motor nach einem der Ansprüche 1 bis 46, dadurch gekennzeichnet, daß das Lüfterrad (20) innerhalb des topfförmigen Gehäuses (10) angeordnet ist.
